(19) Europäisches Patentamt
European Patent Office
Office européen des brevets

(11) Publication number: **0 292 203**
**A1**

(12) **EUROPEAN PATENT APPLICATION**

(21) Application number: **88304323.4**

(22) Date of filing: **12.05.88**

(51) Int. Cl.[4]: **B29C 67/18 , B01D 13/00 , C08L 63/00**

(30) Priority: **18.05.87 US 50356**

(43) Date of publication of application: **23.11.88 Bulletin 88/47**

(84) Designated Contracting States: **DE FR GB**

(71) Applicant: **THE STANDARD OIL COMPANY**
**200 Public Square, 36-F-3454**
**Cleveland Ohio 44114-2375(US)**

(72) Inventor: **Davis, James Critser**
**6000 Bradford Way**
**Hudson Ohio 44236(US)**
Inventor: **Lawrence, Earl Grover**
**4265 Rocky River Drive**
**Cleveland Ohio 44135(US)**
Inventor: **Giordano, Paul Joseph, Jr.**
**5596 Hummelfine Drive**
**Hudson Ohio 44236(US)**
Inventor: **Smierciak, Richard Chester**
**9285 June Drive**
**Streetsboro Ohio 44241(US)**

(74) Representative: **Dodding, Robert Anthony et al**
**BP INTERNATIONAL LIMITED Patents Division Chertsey Road**
**Sunbury-on-Thames Middlesex, TW16 7LN(GB)**

(54) **Epoxy fluorocarbon encapsulating method and article produced.**

(57) A process for encapsulating a substrate comprising placing the substrate in a mold, filling the mold with an encapsulating composition comprising about 5 to about 60 percent by weight of a powdered fluorocarbon dispersed in about 95 to about 30 percent by weight of epoxy resin and curing the composition to form a tight chemical resistant bond with the substrate. Preferably, the particle size of the fluorocarbon is 500 microns or less, most preferably 150 microns or less, and especially preferred 10 microns or less.

EP 0 292 203 A1

## EPOXY FLUOROCARBON ENCAPSULATING METHOD AND ARTICLE PRODUCED

The present invention is directed to a method of encapsulating articles utilizing epoxy fluoropolymer compositions having superior chemical resistance, solvent resistance and low temperature cure. The articles suitable for encapsulation include chemical separation units, electrical components, surgical implants and the like. The articles may be made from metal, wood, plastic, etc. as the epoxy fluorocarbon has the ability to form an extremely good bond with numerous types of materials. This invention further relates to the use of a novel 100 percent solids epoxy fluoropolymer composition for encapsulation of various articles. In another aspect, the invention relates to a novel process for encapsulating electrical components providing these components with excellent corrosion resistance and chemical resistance in harsh environments.

There is demand in the industry for encapsulants that will withstand the effects of a variety of severe environmental conditions. Many varieties of encapsulating compositions are currently available that are based on various polymeric materials (e.g. U.S. Patent 3,962,094 and 4,400,276 herein incorporated by reference).

In particular, the encapsulating composition has specific utility in forming hollow fiber separatory devices useful for dialysis, ultra-filtration, reverse osmosis, hemodialysis, hemoultrafiltration, blood oxygenation and the like. While various methods of manufacture have been described, in general to these articles the resulting separatory element consists of a plurality of fine hollow fibers whose end portions are potted in a tube-sheet and whose open fiber ends terminate in a tube-sheet face which provides liquid access to the interior of the fibers. The separatory elements are sealed within a casing to form a separatory cell having one or more liquid ports which allow for the passage of one fluid through the fibers and another around the fibers without mixing of the two fluids. The separatory element may have two tube-sheets or a single tube-sheet, in which the latter case the fibers are doubled back so that all the ends terminate together. The general configuration of the separatory element and separatory cell is similar to a tube-and-shell heat exchanger. In order for a tube-sheet material to be useful, it should adhere well to the fibers and yet not deform them. Further, it must be easy to handle and must fabricate into a strong unit. And, of course, it must be nontoxic when used in biomedical applications.

Patents representative of the art of hollow fiber separatory devices include U.S. Pat. Nos. 2,972,349; 3,228,876; 3,228,877; 3,422,008; 3,423,491; 3,339,341; and 3,503,515.

A number of resins have been used to form the tube-sheets. Typical of such resins are polyolefins, wax-extended polyolefins, polyolefin copolymers, polyamides, polystyrene, polyvinyl chloride, silicone rubbers, epoxy resins and the like. However, all the above resins have been found deficient in one aspect or another, and the art to date has not found a generally acceptable tube-sheet material, particularly regarding medical applications.

The advantages of a solventless encapsulating process of the present invention includes the minimization of surface defects for the encapsulant due to the absence of solvents and excellent adhesion to the encapsulated article leading to superior heat and chemical resistance (i.e. reduced swelling).

It is an object of this invention to provide process for encapsulating an article with a 100 percent solids, solvent free epoxy-fluoropolymer composition.

It is another object of this invention to provide a low temperature encapsulating procedure utilizing a 100 percent solid solvent free epoxy-fluorocarbon composition.

These and other objects, together with the advantages over known methods shall become apparent from the specification which follows and are accomplished by the invention as hereinafter described and claimed.

We have found that a dispersion system of a fluorocarbon polymer in an epoxy resin results in an encapsulating composition with improved properties. The present invention comprising an encapsulating procedure utilizing a solventless epoxy-fluorocarbon composition based on the multi-functional epoxy resin which serves as a resinous vehicle prior to curing and as a matrix material after curing for the fluorocarbon polymer.

According to the present invention, there is provided a process of encapsulating an article comprising placing the article in a mould, introducing an encapsulating composition comprising about 5 to about 60 percent preferably 5 to 24 percent by weight of a powdered fluorocarbon dispersed in about 95 to about 30 percent by weight of epoxy resin into the mould about the article, and curing the encapsulating composition to form a tight solvent resistant casing about said article. Preferably the particle size of the fluorocarbon polymer is less than 500 microns, most preferably less than or equal to 150 microns and especially preferably less than or equal to 10 microns.

The epoxy fluorocarbon polymer compositions of this invention can be used for encapsulation of various

article as listed previously. However, the composition has particular utility in encapsulating hollow fiber separatory devices as disclosed in U.S. Patent 3,962,094. Other major uses for this composition include encapsulating surgical implants, electrical component, etc. where the article should be protected from severe chemical environments.

The encapsulating composition used in the process of the instant invention comprises an intimate, uniform dispersion of a fluorocarbon polymer in an epoxy resin with a curing agent.

The encapsulating compositions of the present invention contain as a first component an epoxy resin. In general, epoxy resins are characterized by the presence of a three-membered cyclic ether group commonly referred to as an epoxy group which is represented as follows:

(I)

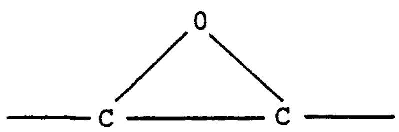

There are two commonly used classes of epoxy resins, diglycidyl ethers of bisphenol A and Novolak Epoxy resins. Molecular weight and epoxide equivalent are controlled by varying the reactant ratios. The epoxy resin functions as a dispersing resinous vehicle and matrix for the fluorocarbon polymer. The coating compositions of the present invention are classified as 100 percent solids because they contain essentially no volatile solvents. The fluorocarbon polymer is uniformly dispersed in the epoxy resin resulting in a network of fluoropolymer which is homogeneously dispersed throughout the composite. However, minor amounts of solvents may optionally be used that may be volatile, which does not defeat the object of this invention, to provide a substantially 100 percent solid coating composition.

These epoxy resins can be employed in the composition either alone or in combination. The compositions of the present invention generally contain, in percent of the total weight, from about 95 percent to about 30 percent and preferably from about 90 percent to about 75 percent of the epoxy resin.

The conventional epoxy resins are diglycidyl ethers of bisphenol A derived from bisphenol A (4,4'-isopropylidenediphenol) and epichlorohydrin. The reaction product is believed to have the form of a polyglycidyl ether of bisphenol A (the glycidyl group being more formally referred to as the 2,3-epoxypropyl group) and thus may be thought of as a polyether derived from the diphenol and glycidyl (2,3-epoxy-1-propanol). The structure usually assigned to the resinous product is

(II)

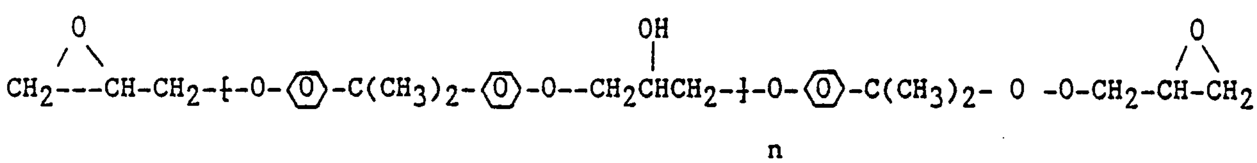

A viscous liquid epoxy resin, average molecular weight about 380, is obtained by reacting the epichlorohydrin in high molecular proportion relative to the bisphenol A, the reaction product containing well over 85 mole percent of the monomeric diglycidyl ether of bisphenol A (represented in formula II, where n = 0), which may be named 2,2-bis(p-(2,3-epoxypropoxy)phenyl)propane, and smaller proportions of units in which n is an integer equal to 1, 2, 3, etc. This product exemplifies epoxide monomers and prepolymers, having a moderate molecular weight, preferably of the order of 1,000 or less, which may be cross-linked or otherwise polymerized in accordance with the invention. Solid diglycidyl ethers of bisphenol A are also useful epoxy resins for the instant invention. The structure is the same as above, in formula II, except the average value of n ranges from 1 to 20. High molecular weight diglycidyl ethers of bisphenol A are also useful for the instant invention. The molecular weight of the product is a function of the ratio of epichlorohydrin-bisphenol A. The average value of n ranges from 1 to 20 and as the n value becomes greater, the molecular weight of the resin increases.

The Novolak Epoxy resins are obtained by the known reaction of epichlorohydrin with a novolak resin. First, a phenol-formaldehyde type resin is obtained primarily by the use of acid catalysts and an excess of phenol. The Epoxy Phenol-Novolak Resins are then prepared from the phenol-formaldehyde condensation products with subsequent epoxidation, utilizing epichlorohydrin. The structure usually assigned this resinous structure is

(III)

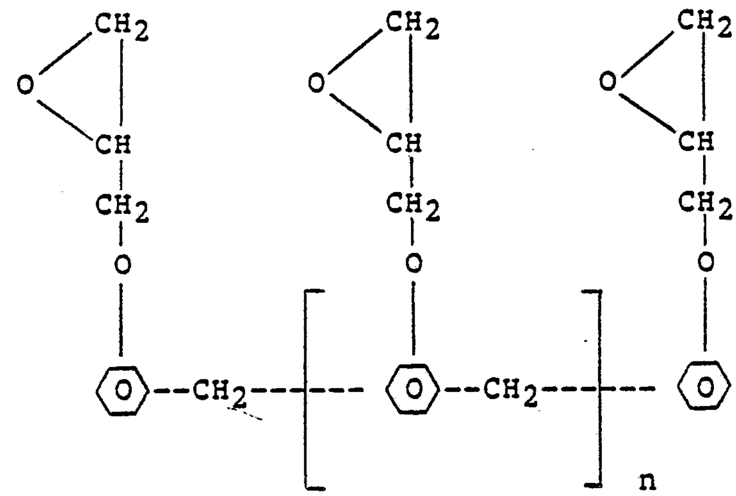

The Epoxy Novolak resin can range from a high viscosity liquid, (an example of which is formula III, where n averages about 0.2) to a solid, (where the value of n in formula III is greater than 3).

Many other epoxide materials are available in polymerizeable monomeric or prepolymeric forms. Typical epoxide or polyepoxide materials include but are not limited to epoxidized cyclohexene oxides, epoxidized cycloalkenes, glycidyl esters of acrylic acid, glycidyl alkyl ethers, glycidyl aryl ethers, esters of epoxidized cyclic acids, halogenated epoxides, styrene oxide, bisphenol F epoxides and the like.

The epoxidized cyclohexene oxides and their derivatives and homologues useful as epoxide materials include but are not limited to epoxidized cyclohexene oxide, 1,2-epoxycyclohexene, vinylcyclohexene dioxide, more specifically named 3-(epoxyethyl)-7- oxabicyclo (4.1.0) heptane, and 1,2-epoxy-4-(epoxyethyl)cyclohexane. Most preferred is epoxidized cyclohexene oxide.

The epoxidized cycloalkenes and their derivatives and homologues useful as epoxide materials include but are not limited to the epoxidized derivatives of ethylene oxide, propylene oxide, trimethylene oxide, 3,3-bis(chloromethyl)oxetane, tetrahydrofuran, dicyclopentadiene dioxide, 1,3,5-trioxane, 2,3 epoxybutane, polycyclic diepoxide and 3,4-8,9-diepoxy tricyclo-[5.2.1.$0^{2,4}$]-decane. Most preferred is epoxidized polycyclic diepoxide.

The epoxidized glycidyl esters of acrylic acid and their derivatives and homologues include but are not limited to the glycidyl derivatives of methacrylic acid, acrylonitrile, crotonic acid, allylglycidyl ether, 1-allyloxyl-2,3-epoxypropane, glycidyl phenyl ether, and 1,2-epoxy-3-phenoxypropane. Most preferred are epoxidized methacrylic acid and acrylonitrile.

The epoxidized glycidyl alkylethers and their derivatives and homologues include but are not limited to glycidyl octyl ether, dicyl glycidyl ether, dodecyl glycidyl ether and glycidyl tetradecyl ether. Most preferred is epoxidized glycidyl octyl ether.

The epoxidized glycidyl aryl ethers and their derivatives and homologues include but are not limited to benzyl glycidyl ether, methyl benzyl glycidyl ether, dimethyl benzyl glycidyl ether, ethyl glycidyl ether. Most preferred is benzyl glycidyl ether.

Esters of epoxidized cyclic alcohols or of epoxidized cycloalkanecarboxylic acids or of both and their derivatives and homologues include but are not limited to esters of epoxidized cyclohexanemethanol and epoxidized cyclohexane-carboxylic acid such as diepoxide (3,4-epoxy-cyclohexyl) methyl 3,4-epoxycyclohexane-carboxylate, esters of a substituted (epoxycycloalkyl) methanol and a dibasic acid such as bis (3,4-epoxy-6-methylcyclohexyl)-methyl) adipate. Diepoxide monomeric materials may be obtained conveniently as bis(epoxyalkyl) ethers of glycols, an example being the diglycidyl ether of 1,4-butanediol, that is, 1,4-bis-(2,3-epoxypropoxy)butane. We have found this diepoxide is related to the diglycidyl ether of bisphenol A, that is 2,2-bis-[p-(2,3-epoxypropoxy)-phenyl]propane.

Reactive diluents and their derivatives and homologues likewise may be used such as 1.2 epoxy dodecane and the like.

The second component of the encapsulating compositions of the present invention is a fluorocarbon polymer. The fluorocarbon polymers according to this invention are not fused or sintered at 700°F but rather the epoxy fluorocarbon compositions are cured at low temperatures, thus retaining good structural properties of hardness and durability. Further, when processed according to the invention, the fluorocarbon polymers do not need reinforcing agents to have good structural properties. The fluorocarbon polymers used are those of hydrocarbon monomers that are perfluorinated.

These fluorocarbon polymers can be employed in the composition either alone or in combination. The fluorocarbon polymers used are in powder or granular form. The compositions of the present invention generally contain, in percent of total weight, from about 5 percent to about 60 percent, preferably from about 10 percent to about 40 percent of powdered fluorocarbon polymers more preferably between 5 to 24 percent and especially preferred 10 to 20 percent. The fluorocarbon polymers have a particle size less than 500 microns, preferably less than or equal to 150 microns and especially preferred less than or equal to 10 microns.

Typical fluorocarbon polymers include but are not limited to homologues and derivatives of polytetrafluoroethylene, Teflon FEP-a fluorinated ethylene propylene which is a copolymer of tetrafluoroethylene and hexafluoropropylene, Teflon® TFE-tetrafluoroethylene, Teflon® PFA-perfluoroalkoxy resin, Tefzel®-modified copolymer of ethylene and tetrafluoroethylene and the like. Most preferred is polytetrafluoroethylene.

To effect crosslinking of the epoxy resin, the epoxy fluorocarbon mixture is cured by known epoxy resin curing methods. Epoxy resins may be cured both catalytically and stoichiometrically. The epoxy fluorocarbon mixture of the instant invention is cured at about 25°C to about 150°C and most preferably from about 85°C to about 100°C. The curing time is dependent on the temperature employed and the kinetics of the reaction to form the coating composition of the instant invention.

Catalytic curing agents are a group of compounds which promote epoxy reactions without being consumed in the process. The catalytic curing agents and the cure of the resin using these agents are generally well known in the art. The amount of catalyst used is about 1 to about 10 weight percent. This type of catalyst is activated by heat. A heating condition of about 80°C is generally used. The upper limit of the heating temperature and the length of time of heating is dependent upon various factors such as the thermal deterioration point and decomposition point of the films and also by heat desirability of the object to be cured. The epoxy fluorocarbon mixture in the presence of the catalytic curing agents is indefinitely stable at room temperature so that the pot life of the system is extremely long. Acidic catalytic curing agents are catalytic and include but are not limited to carboxylic acids, anhydrides, dibasic organic acids, phenols, Lewis acids, amine aducts, tertiary amines and others. Common catalytic curing agents include but are not limited to benzylidimelthylamine, boron trifluoride monoethylamine, formic acid, benzoic acid, formic anhydride, acetic anhydride, oxalic acid, malonic acid, succinic acid, ortho-, meta-, para-cresol and the like.

Stoichiometric curing agents are a group of compounds in which the curing agents are consumed in the cure process. The stoichiometric curing agents and the cure of the resin using these agents are generally well known in the art. The rate of the reaction depends upon the chemistry of the stoichiometric curing agent and the epoxy resin. Tertiary amines and similar compounds can be used in conjunction with basic compounds to accelerate polymerization of the epoxy materials. The basic stoichiometric curing agents employed include but are not limited to Lewis bases, inorganic bases, primary and secondary amines, amides and others. Examples of suitable stoichiometric curing agents are polysulfides, in particular, mercapto terminated polyoxyethylene; aliphatic amines, in particular, cyclohexyl amine; polyamimes, in particular, triethylene tetramine; amidoamines, in particular, the reaction product of ethylene diamine with linoleic acid dimer; aromatic amines, in particular, aniline; anhydrides, in particular, proprionic anhydride; melamine-formaldehyde; urea-formaldehyde; phenol-formaldehydes, in particular, t-butyl phenol-formaldehyde; and the like.

Another class of curing agents that may be employed are photoinitiated curing agents. The photoinitiator curing agents and the cure thereof are generally well known in the art. Examples of suitable photoinitiator curing agents include benzophenone, dye sensitizers, triaryl sulfonium salts, benzoin ethers, substituted acetophone, Michler's ketone, benzil and the like. The composition is cured by radiation in the range of ultraviolet to visible light. The light source emits wavelengths in the spectrum from about 1,000 Angstroms to about 6,000 Angstroms. The systems used to generate radiation for the photoinitiated cure can be any known in the art such as low pressure, medium pressure, high pressure or super high pressure mercury lamps; mercury, carbon and plasma arc lamps; xenon lamps; UV light emitting diodes; UV emitting lasers and the like. The mixture can also be cured using an electron beam apparatus. Further, the mixture

can be cured by tungsten lamps, sunlight and the like.

The epoxy fluoropolymer compositions used in the process of the present invention can optionally include but do not require the addition of plasticizers; silica; glass fiber; cloth; beads; powder; flake; graphite; silicon carbide; boron; metal rod; metal flake; metal oxides; natural fibers such as asbestos, wood and textiles; biologically active chemicals such as organotin compounds; alumina; boron nitride; plaster and portland cement. The compositions used in the instant invention have improved results whether or not these components are employed.

It will be readily apparent to those skilled in the art that the compositions used in the practice of the instant invention may be modified by the addition of plasticizers, stabilizers, pigments, dispersants, defoamers, surfactants, extenders, fillers, reinforcing agents and other film formers. The compositions may also optionally contain various flattening agents, surface active agents, thixotropic agents, UV light absorbers, flow control agents, viscosity agents, antioxidant agents and dyes. All these additives and the use thereof are well known in the art and do not require extensive discussion, it being understood that any compound possessing the ability to function in such a manner, i.e., as a flattening agent, surface active agent, UV light absorber and the like, can be used so long as they do not deleteriously affect the curing of the composition and do not adversely affect the characteristics of the encapsulant. However, these components are not required.

It will be appreciated therefore that the epoxy resins, fluorocarbon polymers, curing agents and any other modifiers should be chemically compatible with each other.

In the practice of this invention, the composition is first compounded by adding together the epoxy resins and the fluorocarbon polymers in the proper proportion preferably at an elevated temperature (i.e. 80°C) to form generally an intimate, uniform dispersion. To this dispersion is added the curing agents, with stirring to form a mixture. Optionally, at any step in the process prior to the cure, any of the aforementioned additives may be stirred into the mixture. The various components are thoroughly mixed so as to form a uniform dispersion mixture of the composition's components, in particular, the fluorocarbon polymers in the epoxy resins.

The composition is then applied about the substrate by any conventional procedure such as molding in particular injection molding, and the like. A typical encapsulating procedure may comprise placing the article in an injection mold and then injecting the composition into the mold surrounding the article. The composition is then cured, preferably at an elevated temperature of between 80°C to 150°C. Another preferred procedure comprises the utilization of two injection feeds into the mold, one line having the curing or hardening agent for the epoxy resin and the second line containing the epoxy-fluorocarbon mixture. The various articles to be encapsulated may be made from wood, paper, metal, pretreated metal, plastic and the like. Generally, the composition is injected about the article in an amount sufficient to ensure complete coverage of the article with the composition in a thickness of from about 1 mil to about 100 mil, preferably from about 6 mil to about 26 mil. By selection of components and additives the composition may be both translucent coatings or opaque coating. The composition mixture is then cured, preferably, at an elevated temperature (80°C) and solidified to form the secure protective casing about the article. After cure, there is present on the surface of the substrate a hard, non-tacky, non-mar adhesive and chemically resistant protective casing which tenaciously adheres to the substrate.

The compositions of the present invention are comprised of a uniform dispersion of a fluorocarbon polymer in a polymerized epoxy resin matrix. It is theorized that in curing the fine homogeneous dispersion of the composition mixture, the fluorine containing molecules becomes incorporated throughout the epoxy network matrix due to the polymerization of the epoxy resin to epoxy resin trapping and physically holding the fluorine containing molecules in the matrix. The compositions superior properties are derived from the novel multifunctional combination of epoxy and fluorocarbon moeities resulting in excellent adhesion, good chemical resistance and wetting properties of the epoxy resins being retained together with excellent chemical resistance, hydrophobicity, and release properties of the fluorocarbon polymers.

The following example is illustrative of the process of the present invention.

Example I

The encapsulating composition was formed by mixing

| Part A | Wt. % |
|---|---|
| Shell Liquid Epoxy 828 | 44.4 |
| 1:1 Blend Shell Oxitol:Toluene | 9.1 |
| 3M FC 430 Fluorosurfactant | 1.8 |
| Dupont DLX 6000 Micropowder PTFE | 18.2 |
| | 73.5 |

| Part B | Wt. % |
|---|---|
| Anchamine TL (Aromatic Amine Eutectic supplied from Pacific Anchor Chemical Corp, Los Angeles, CA) | 26.5 |
| | 100.0% |

to form an intimate dispersion of the ingredients and precure at 80°C (this produces a solvent-free system) in a hot air oven for 20-25 minutes or until a thickened consistency is obtained and stir well every 2 minutes to ensure a homogeneous blend. The mixture was injected into the ends of the appropriate fittings around a hollow fiber bundle whose ends had been previously sealed with Daco Cement to prevent wicking. The composition was injected into the center of the bundle until the mixture was observed penetrating between the hollow fibers outward. The bundle was then placed in the 80°C oven for 45 minutes to one hour in an upright position. The bundle was removed from the oven and while it was still hot the hollow fibers-resin ends filled with the cement are cut off, flush with the end of the tubing to expose the hollow fibers. The bundle was then cured overnight at 80°C.

The resulting encapsulating hollow fiber unit was used to pump tributyl phosphate through a tubesheet for 8 hours with no signs of swelling or degradation.

Although the invention has been described in detail through the preceding examples, these examples are for the purpose of illustration only, and it is understood that variations and modifications can be made by one skilled in the art without departing from the spirit and the scope of the invention as hereinafter claimed.

## Claims

1. A process of encapsulating an article comprising placing the article in a mold, introducing an encapsulating composition comprising about 5 to about 60 percent by weight of a powdered fluorocarbon dispersed in about 95 to about 30 percent by weight of epoxy resin into the mold about the article, and curing the encapsulating composition to form a tight solvent resistant casing about said article.

2. A process according to claim 1 wherein the coating composition is solvent free.

3. A process according to claim 1 or claim 2 wherein said composition comprises from about 10 to about 40 percent of powdered fluorocarbon and from about 90 to about 75 percent of an epoxy resin.

4. A process according to any of the preceding claims wherein said epoxy resin is selected from the group consisting of diglycidyl ether of bisphenol A, diglycidyl ether of novolak epoxy and combinations thereof.

5. A process according to claim 4 wherein said fluorocarbon polymer is polytetrafluoroethylene.

6. A process according to any of the preceding claims wherein said coating composition is cured at about 20°C to about 150°C.

7. A process according to any of the preceding claims wherein said powdered fluorocarbon is selected to have a particle size of 500 microns.

8. A process according to claim 7 wherein said particle size is 150 microns or less.

9. A process according to claim 7 or claim 8 wherein said particle size is 10 microns or less.

European Patent Office

# EUROPEAN SEARCH REPORT

Application Number

EP 88 30 4323

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 219 928 (STANDARD OIL CO.) * Whole document * | 2-9 | B 29 C 67/18<br>B 01 D 13/00<br>C 08 L 63/00 |
| Y | | 1 | |
| Y | US-A-3 703 962 (DOW CHEMICAL CO.) * Claims; examples * | 1 | |
| D,Y | US-A-3 503 515 (E.I. DU PONT DE NEMOURS & CO.) * Claims; figures * | 1 | |

TECHNICAL FIELDS SEARCHED (Int. Cl.4)

B 29 C
B 01 D
C 08 L

The present search report has been drawn up for all claims

| Place of search | Date of completion of the search | Examiner |
|---|---|---|
| THE HAGUE | 07-09-1988 | NILSSON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)